# EUROPEAN PATENT APPLICATION

(11) **EP 2 177 936 A1**
(43) Date of publication of application: **21.04.2010**
(21) Application number: 10000008.2
(22) Date of filing: 07.11.2002
(51) Int. Cl.: G02B 5/30

(54) **Process for producing optical device**

(30) Priority: 09.11.2001 JP 2001345453; 25.10.2002 JP 2002311697
(62) Divisional of application: 02788601.9
(71) Applicant: Dai Nippon Printing Co., Ltd., Tokyo 162-8001 (JP)
(72) Inventor: Kashima, Keiji, Tokyo 162-8001 (JP)
(74) Representative: Müller-Boré & Partner Patentanwälte

(57) **Abstract**

The present invention provides a process for producing an optical device, characterized by comprising the steps of providing a supporting substrate having an aligning ability, stacking a composition, containing at least a polymerizable liquid crystal material, for liquid crystal layer formation on the supporting substrate and holding the layer at a temperature which brings the layer to a liquid crystal phase, to form a liquid crystal layer having predetermined liquid crystal regularity, applying an actinic radiation to the liquid crystal layer to convert the liquid crystal layer to an optical function layer (step of forming optical function layer) by polymerization (cross-linking), and heat treating the optical function layer at or above a temperature which corresponds to an isotropic phase after forming the optical function layer, wherein the supporting substrate is a stretched polyethylene terephthalate film having an aligning ability.

## Description

### TECHNICAL FIELD

The present invention relates to a process for producing an optical device, which comprises a supporting substrate having an aligning ability and, provided on the supporting substrate, a polymerization product, as an optical function layer, of a polymerizable liquid crystal material and is excellent particularly in adhesion of the optical function layer to the supporting substrate.

### BACKGROUND ART

Optical devices produced by polymerizing a polymerizable liquid crystal material have recently been proposed (for example, Japanese Patent Laid-Open No. 100045/2001 and Published Japanese Translation of PCT Publication No. 508882/1998). These optical devices are advantageous in that properties of a liquid crystal can be anchored or immobilized by polymerization and can be used as a film. This has led to expectation of the development of optical devices to various applications.

Regarding optical devices such as phase difference films, Japanese Patent Laid-Open No. 2109/1993 discloses a stretched phase difference film possessing excellent heat resistance. Japanese Patent Laid-Open No. 142510/1993 discloses an optical device comprising a thermally polymerizable liquid crystalline polymer possessing excellent heat resistance. Further, Japanese Patent Laid-Open No. 133628/2001 discloses a highly heat-resistant polarizing diffractive film comprising a liquid crystal material which contains a polymeric liquid crystal and a crosslinkable material.

The above optical device prepared by polymerizing a polymerizable liquid crystal material, however, suffers from a problem of poor adhesion to a supporting substrate having an aligning ability. Therefore, the optical device should be handled very carefully, and, for example, in a production process of an image processing device using this optical device, handling of the optical device is troublesome.

On the other hand, the stretched phase difference film disadvantageously undergoes a change in phase difference level at 100°C or above, particularly at 120°C or above, and, thus, when used, for example, in on-vehicle LCDs, poses an uneven display or other problems.

### DISCLOSURE OF THE INVENTION

In view of the above problems of the prior art, the present invention has been made, and a major object of the present invention is to provide a production process of an optical device in which a polymerizable liquid crystal material having liquid crystal regularity, that is, regularity characteristic of a liquid crystal, can be cured, while retaining the liquid crystal regularity, to form an optical function layer which possesses excellent adhesion to a supporting substrate in the optical device.

The above object can be attained by a process for producing an optical device, said process comprising the steps of: providing a supporting substrate having an aligning ability; stacking a composition, containing at least a polymerizable liquid crystal material, for liquid crystal layer formation on the supporting substrate to form a liquid crystal layer having predetermined liquid crystal regularity; applying an actinic radiation to the liquid crystal layer to convert the liquid crystal layer to an optical function layer (step of forming optical function layer); and heat treating the optical function layer at or above a temperature which corresponds to an isotropic layer before polymerizing (crosslinking the liquid crystal layer (step of heat treatment) .

In a preferred embodiment of the present invention, the step of heat treatment is carried out at a temperature in the range of 80 to 120°C. In an alternative preferred embodiment of the present invention, the step of heat treatment is carried out at a temperature in the range of 180 to 260°C. In the present invention, the heat treatment of an optical function layer, formed by polymerizing a polymerizable liquid crystal material, at a predetermined temperature can improve the adhesion between the optical function layer and the supporting substrate.

Preferably, the supporting substrate having an aligning ability comprises a transparent substrate and an aligning film provided on the transparent substrate. An improvement in adhesion of the optical function layer to the aligning film is an advantage of the present invention. Further, the adoption of the construction, wherein the aligning film is separately provided, can render the degree of freedom in the direction of alignment very high.

On the other hand, the supporting substrate having an aligning ability may be a stretched film. In the present invention, the adhesion between the stretched film and the optical function layer has also been improved. Further, when the supporting substrate having an aligning ability is the stretched film, the provision of the supporting substrate is so easy that the process can advantageously be simplified.

In an embodiment of the present invention, the polymerizable liquid crystal material comprises a polymerizable monomer, and the predetermined liquid crystal regularity is nematic regularity, i.e., regularity characteristic of a nematic liquid crystal, or smectic regularity, i.e., regularity characteristic of a smectic liquid crystal. An optical function layer formed from this polymerizable liquid crystal material functions as a retardation layer and can be used in various applications where a phase difference function is required, for example, λ/4 phase difference plates.

Further, preferably, the polymerizable liquid crystal material comprises a polymerizable monomer and a polymerizable chiral dopant and the predetermined liquid crystal regularity is cholesteric regularity, i.e., regularity characteristic of a cholesteric liquid crystal. An optical function layer formed from this polymerizable liquid crystal material can be used as a circularly polarized light control layer, for example, in various applications such as color filters.

Preferably, the composition for liquid crystal layer formation further comprises a photopolymerization initiator. In this case, when polymerization is carried out by applying an actinic radiation, the use of a photopolymerization initiator can accelerate the polymerization and, as a result, a homogeneous optical function layer can be provided.

The composition for liquid crystal layer formation is preferably a solvent-type coating liquid for liquid crystal layer formation. When the solvent-type coating liquid for liquid crystal layer formation is used, the process can be made easier than the process in other methods, for example, a dry film formation method and a melt coating method.

Preferably, the heat treatment is carried out for 1 to 60 min. The heating treatment for a time period in the above-defined time range is preferred from the viewpoint of improving the adhesion of the optical function layer.

In an embodiment of the present invention, the step of transferring the optical function layer formed on the supporting substrate having an aligning ability onto a receiving object (step of transfer) may be provided after the step of forming optical function layer. For example, in the case where an optical function layer should be provided on an object having other function, the step of transferring the optical function layer onto the object can be carried out. In this case, an optical device having good adhesion between the object and the optical function layer can be provided by carrying out the above step of heat treatment after the transfer operation.

Preferably, the step of forming a protective layer (step of forming protective layer) is provided after the step of heat treatment. The step of heat treatment can improve the adhesion of the optical function layer. When a higher level of adhesion is required, however, the formation of a protective layer is preferred. In this case, the step of forming protective layer is preferably carried out.

Preferably, the polymerizable liquid crystal material comprises a polymerizable liquid crystal monomer and a polymerizable chiral dopant, and the molecule of the polymerizable chiral dopant has a polymerizable functional group in its both ends. When each of the molecule of the polymerizable liquid crystal monomer and the molecule of the polymerizable chiral dopant has a polymerizable functional group in its both ends, both ends of adjacent monomer molecules are bonded in a three-dimensional network manner, that is, polymerization in a three-dimensional network manner (crosslinking) takes place. As a result, an optical device having better heat resistance can be provided.

The step of forming a protective layer (step of forming protective layer) may be provided after the step of heat treatment. The provision of the protective layer can protect the surface of the optical device.

According to another aspect of the present invention, there is provided an optical device characterized by comprising a supporting material and, provided on the supporting material, an optical function layer which has been formed by curing a polymerizable liquid crystal material while retaining predetermined liquid crystal regularity, the adhesion between the optical function layer and the supporting material being not less than 6 in terms of evaluation point number in a cross-cut tape peel test specified in JIS (Japanese Industrial Standards) K 5400 (1990) 8.5. The conventional optical function layer formed by curing a polymerizable liquid crystal material has very poor adhesion to a supporting material. The adhesion level in the above-defined range cannot be attained by the prior art technique. Therefore, the optical device of the present invention is significantly superior to the conventional optical device.

In a preferred embodiment of the present invention, the supporting material is a supporting substrate having an aligning ability. When the step of transfer is not carried out, the optical function layer is provided on a supporting substrate having an aligning ability. In the optical device according to the present invention, the adhesion between the supporting substrate having an aligning ability and the optical function layer is also good.

Preferably, the supporting substrate having an aligning ability comprises a transparent substrate and an aligning film provided on the transparent substrate. Also in the case of this supporting substrate having an aligning film, the adhesion between the supporting substrate and the optical function layer is satisfactory.

The supporting substrate having an aligning ability may be a stretched film. Even when the supporting substrate is a stretched film, the adhesion between the supporting substrate and the optical function layer is satisfactory.

Further, preferably, the supporting material is a receiving object which is a transparent substrate. When the step of transfer has been carried out, the supporting material is a receiving object. In this case, the receiving object is preferably a transparent substrate.

In a preferred embodiment of the present invention, the polymerizable liquid crystal material comprises a polymerizable liquid crystal monomer, the predetermined liquid crystal regularity is nematic regularity or smectic regularity, and the optical function layer is a retardation layer. When the optical device having a retardation layer is used, the adhesion between the supporting material and the retardation layer is important and the above construction can provide good adhesion between the supporting material and the retardation layer.

Further, preferably, the polymerizable liquid crystal material comprises a polymerizable monomer and a polymerizable chiral dopant, the predetermined liquid crystal regularity is cholesteric regularity, and the optical function layer is a selective reflecting layer and/or a retardation layer. The above cholesteric layer, that is, a layer which has been anchored in such a state that cholesteric regularity is retained, functions as a circularly polarized light control layer or a retardation layer. Therefore, also in this case, the adhesion between the circularly polarized light control layer or the retardation layer and the supporting substrate is very important, and the above construction can provide good adhesion between the circularly polarized light control layer or the retardation layer and the supporting substrate.

A construction may be adopted wherein the polymerizable liquid crystal material comprises a polymerizable liquid crystal monomer and the molecule of the polymerizable liquid crystal monomer has a polymerizable functional group in its both ends. When the molecule of the polymerizable liquid crystal monomer has a polymerizable functional group in its both ends, both ends of adjacent monomer molecules are bonded in a three-dimensional network manner, that is, polymerization in a three-dimensional network manner (crosslinking) takes place. As a result, an optical device having better heat resistance can be provided.

Further, a construction may be adopted wherein the polymerizable liquid crystal material comprises a polymerizable liquid crystal monomer and a polymerizable chiral dopant and the molecule of the polymerizable chiral dopant has a polymerizable functional group in its both ends. When the molecule of the polymerizable chiral dopant has a polymerizable functional group in its both ends, both ends of adjacent molecules are bonded in a three-dimensional network manner, that is, polymerization in a three-dimensional network manner (crosslinking) takes place. As a result, an optical device having better heat resistance can be provided.

### BRIEF DESCRIPTION OF THE DRAWINGS

Fig. 1 is a diagram illustrating a step which is a part of the production process of an optical device according to the present invention, wherein numeral 1 designates a transparent substrate, numeral 2 an aligning film, and numeral 3 a supporting substrate;
Fig. 2 is a diagram illustrating a step which is a part of the production process of an optical device according to the present invention, wherein numeral 4 designates a liquid crystal layer;
Fig. 3 is a diagram illustrating a step which is a part of the production process of an optical device according to the present invention, wherein numeral 5 designates ultraviolet irradiation;
Fig. 4 is a diagram illustrating a step which is a part of the production process of an optical device according to the present invention, wherein numeral 6 designates an optical function layer;
Fig. 5 is a diagram illustrating a step which is a part of the production process of an optical device according to the present invention, wherein numeral 7 designates heat and numeral 8 an optical device;
Fig. 6 is a diagram illustrating a step which is a part of the production process of an optical device according to the present invention;
Fig. 7 is a diagram illustrating a step which is a part of the production process of an optical device according to another embodiment of the present invention;
Fig. 8 is a diagram illustrating a step which is a part of the production process of an optical device according to another embodiment of the present invention, wherein numeral 9 designates a receiving object;
Fig. 9 is a diagram illustrating a step which is a part of the production process of an optical device according to another embodiment of the present invention;
Fig. 10 is a diagram illustrating a step which is a part of the production process of an optical device according to another embodiment of the present invention; and
Fig. 11 is a diagram illustrating a step which is a part of the production process of an optical device according to another embodiment of the present invention.

### BEST MODE FOR CARRYING OUT THE INVENTION

The production process of an optical device according to the present invention will be described, and an optical device which can be produced by an embodiment of the production process according to the present invention will be then described.

### <Production process of optical device>

The production process of an optical device according to the present invention is characterized by comprising the steps of: providing a supporting substrate having an aligning ability; stacking a composition, containing at least a polymerizable liquid crystal material, for liquid crystal layer formation on the supporting substrate to form a liquid crystal layer having predetermined liquid crystal regularity; applying an actinic radiation to the liquid crystal layer to convert the liquid crystal layer to an optical function layer (step of optical function layer formation); and heat treating the optical function layer at a temperature in the range of 80 to 120°C or 180 to 260°C.

The production process of an optical device according to the present invention is **characterized in that** a composition, for liquid crystal layer formation, containing a polymerizable liquid crystal material is stacked on a supporting substrate to form a liquid crystal layer, an actinic radiation is applied to the liquid crystal layer to cure the polymerizable liquid crystal material in the liquid crystal layer and thus to form an optical function layer, and heat treatment is then carried out in the above temperature range. The heat treatment can improve the adhesion between the optical function layer and the supporting material. Here the term "supporting material" is a concept including the above supporting substrate and a receiving object which will be described later.

The reason why the adhesion can be improved by the step of heat treatment in the present invention is considered to be as follows. Specifically, for example, the supporting substrate having an aligning ability and other supporting materials such as transparent substrates have more or less surface irregularities

(convexes and concaves). It is believed that, in the surface of the supporting material, the application of heat in the above-defined temperature range to the optical function layer softens the material for constituting the optical function layer and permits the material to deform so as to conform to the shape of the surface irregularities. It is considered that this possibly improves the adhesion between the supporting material and the optical function layer.

Further, it is believed that products derived from a photopolymerization initiator contained in the composition of the liquid crystal layer and the residue of the photopolymerization initiator deteriorates the adhesion between the supporting material and the optical function layer. The removal of them by the step of heat treatment in the present invention can also possibly contribute to the improvement in adhesion between the supporting material and the optical function layer.

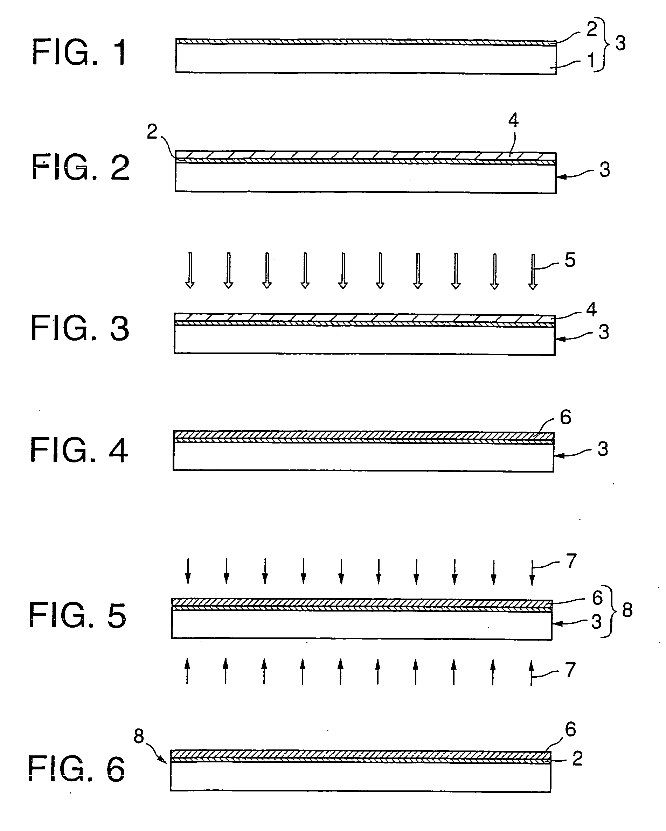

An embodiment of the production process according to the present invention will be described with reference to the accompanying drawings. Figs. 1 to 6 show an embodiment of the production process of an optical device according to the present invention.

In this embodiment, a supporting substrate 3 having an aligning ability is first provided. The supporting substrate 3 comprises a transparent substrate 1 and an aligning film 2 provided on the transparent substrate 1 (step of providing supporting substrate, see Fig. 1).

Next, a coating liquid for liquid crystal layer formation prepared by dissolving a polymerizable liquid crystal material and a photopolymerization initiator in a solvent is coated onto the supporting substrate 3 having an aligning ability, the coating is dried to remove the solvent, and the coating is kept at a temperature suitable for developing a liquid crystal phase to form a liquid crystal layer 4 (step of forming liquid crystal layer, see Fig. 2). By virtue of the action of the aligning film 2, the liquid crystal layer has liquid crystal regularity.

Upon the application of ultraviolet light 5 to the liquid crystal layer 4 having liquid crystal regularity, the polymerizable liquid crystal material in the liquid crystal layer 4 is polymerized to convert the liquid crystal layer 4 to an optical function layer 6 (step of forming optical function layer, see Figs. 3 and 4).

The optical device 8 comprising the optical function layer 6 provided on the supporting substrate 3 is then kept, for example, in an oven at a predetermined temperature, whereby heat 7 is applied to the optical device 8 for heat treatment (step of heat treatment, see Fig. 5).

By virtue of the heat treatment, in the optical device 8, the adhesion between the aligning film 2 and the optical function layer 6 can be rendered good.

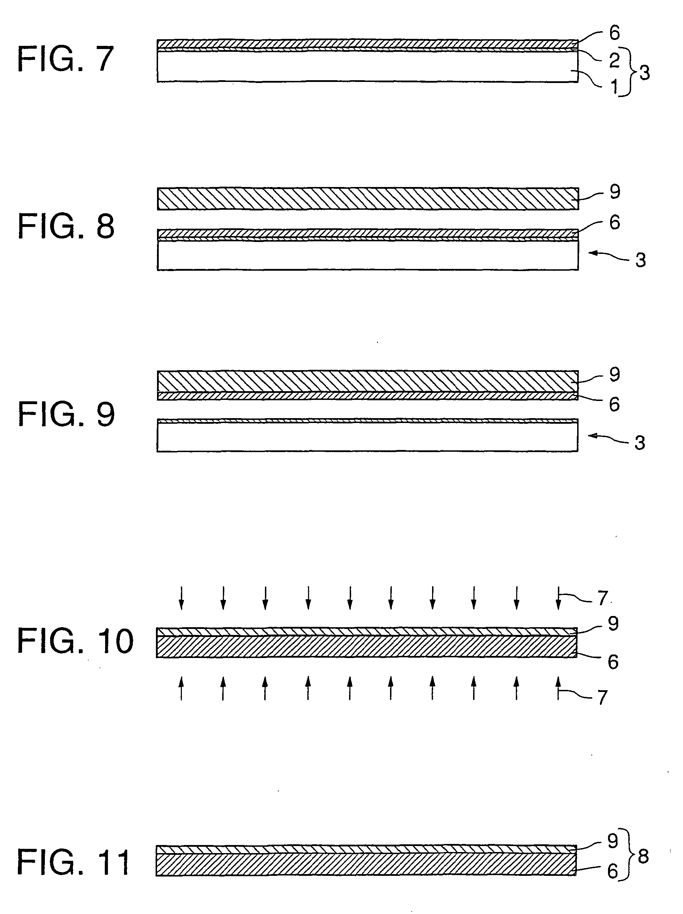

Figs. 7 to 11 show another embodiment of the production process of an optical device according to the present invention. Fig. 7 shows an assembly in such a state that an optical function layer 6 has been formed on a supporting substrate 3, which comprises an aligning film 2 provided on a transparent substrate 1, by the step of forming an optical function layer by ultraviolet light irradiation shown in Fig. 3. In this embodiment, the step of transfer is carried out. In the step of transfer, a receiving object 9 is disposed on the surface side of the optical function layer 6 (see Fig. 8), and the optical function layer 6 is transferred onto the receiving object 9 (see Fig. 9).

As with the above embodiment, the optical function layer 6 transferred onto the receiving object 9 is kept, for example, in an oven at a predetermined temperature, whereby heat 7 is applied to the assembly for heat treatment (step of heat treatment, see Fig. 10). By virtue of the heat treatment, an optical device 8 having improved adhesion between the receiving object 9 and the optical function layer 6 can be provided (see Fig. 11).

The production process of an optical device according to the above embodiments of the present invention will be described in more detail for each step. 1. Step of providing supporting substrate

In the production of the optical device according to the present invention, a supporting substrate having an aligning ability is first provided. The supporting substrate having an aligning ability may be constituted by a substrate which as such has an aligning ability. Alternatively, as shown in Fig. 1, the supporting substrate 3 having an aligning ability may comprise an aligning film 2 provided on a transparent substrate 1. The former will be descried as a first embodiment, and the latter as a second embodiment.

### a. First embodiment

In the first embodiment, a substrate per se has an aligning ability and constitutes the supporting substrate. Specifically, a stretched film may be mentioned as the supporting substrate in the first embodiment. When the stretched film is used, molecules of the liquid crystal material can be aligned along the direction of stretch. In this embodiment, what is required for providing a supporting substrate is only to provide a stretched film. Therefore, advantageously, this can highly simplify the step of providing a supporting substrate. The stretched film may be commercially available one. If necessary, stretched films of various materials may be formed.

Specific examples of films for stretched films include: films of polycarbonate-based polymeric materials, polyester-based polymeric materials such as polyallylate and polyethylene terephthalate, polyimide-based polymeric materials, polysulfone-based polymeric materials, polyether sulfone-based polymeric materials, polystyrene-based polymeric materials, polyolefin-based polymeric materials such as polyethylene and polypropylene, polyvinyl alcohol-based polymeric materials, cellulose acetate-based polymeric materials, polyvinyl chloride-based polymeric materials, polymethyl methacrylate-based polymeric materials or other thermoplastic polymers; and films of liquid crystal polymers.

In the present invention, among others, polyethylene terephthalate (PET) films are preferably used, for example, from the viewpoints of a broad effective stretch ratio range and high availability.

The stretch ratio of the stretched film used in the present invention is not particularly limited so far as the aligning ability can be developed. Therefore, even a biaxially stretched film can be used so far as the stretch ratio in one axis is different from that in the other axis.

The stretch ratio significantly varies depending upon materials used and is not particularly limited. However, in the present invention, the stretch ratio is generally about 150 to 300%, preferably 200 to 250%.

### b. Second embodiment

In the second embodiment, the supporting substrate having an aligning ability comprises a transparent substrate and an aligning film provided on the transparent substrate.

The second embodiment is advantageous in that the direction of aligning can be selected from a relatively wide aligning direction range by selecting the aligning film. Further, various aligning directions can be realized by selecting the type of a coating liquid, for aligning film formation, to be coated onto the transparent substrate, and more effective aligning can be realized.

Aligning films commonly used, for example, in liquid crystal displays can be suitably used as the aligning film in this embodiment. In general, a polyimide-based or polyvinyl alcohol-based aligning film subjected to rubbing treatment is suitable. Photoaligning films may also be used.

The transparent substrate used in this embodiment is not particularly limited so far as the substrate is formed of a transparent material. Examples of transparent substrates include nonflexible transparent rigid materials, such as quartz glass, Pyrex (registered trademark) glass, and synthetic quartz plates, or flexible transparent materials, such as transparent resin films and optical resin plates.

### 2. Step of forming liquid crystal layer

In the present invention, as shown in Fig. 2, a liquid crystal layer 4 is formed on the supporting substrate 3 having an aligning ability.

In the present invention, the liquid crystal layer is formed of a polymerizable liquid crystal material and is not particularly limited so far as the liquid crystal layer can take liquid crystal phases having various types of liquid crystal regularity.

In the formation of the liquid crystal layer, a polymerizable liquid crystal material-containing composition for liquid crystal layer formation is stacked onto a supporting substrate to form a layer for liquid crystal layer formation. Methods usable for the formation of the layer for liquid crystal layer formation include, for example, a method wherein a dry film or the like is previously formed and is stacked as a layer for liquid crystal layer formation onto the supporting substrate, and a method wherein a composition for liquid crystal layer formation is melted and the melt is coated onto the supporting substrate. In the present invention, the layer for liquid crystal layer formation is preferably formed by dissolving the composition for liquid crystal layer formation in a solvent, coating the solution onto the supporting substrate, and removing the solvent. This method is simpler in steps than the other methods.

Coating methods usable herein include spin coating, roll coating, slide coating, printing, dipping/pulling-up coating, and curtain coating (die coating).

Thus, after coating the coating liquid for liquid crystal layer formation, the solvent is removed. Methods usable for removing the solvent include, for example, removal under reduced pressure or removal by heating, and a combination of these methods. Upon the removal of the solvent, the layer for liquid crystal layer formation is formed.

In the present invention, the polymerizable liquid crystal material in the layer for liquid crystal layer formation is brought to a liquid crystal regularity state by taking advantage of the aligning ability of the surface of the supporting substrate, thereby forming the liquid crystal layer. In general, this can be carried out, for example, by raising the polymerizable liquid crystal material to a temperature, at which the polymerizable liquid crystal material can take a liquid crystal phase form, and holding the material at that temperature.

The polymerizable liquid crystal material used in the present invention will be first described. Further, the composition, for liquid crystal layer formation, containing the polymerizable liquid crystal material and the above-described coating liquid for liquid crystal layer formation will be described.

### (Polymerizable liquid crystal material)

Polymerizable liquid crystal materials usable in the present invention include polymerizable liquid crystal monomers, polymerizable liquid crystal oligomers, and polymerizable liquid crystal polymeric materials. Polymerizable liquid crystal materials, which as such have nematic regularity or smectic regularity, are generally used. However, the polymerizable liquid crystal material is not particularly limited to these only and may have cholesteric regularity. However, the presence of a polymerizable functional group at both ends of the molecule is preferred from the viewpoint of the production of a highly heat resistant optical device. In order to impart the cholesteric regularity, when the polymerizable liquid crystal material per se has nematic regularity or smectic regularity, a polymerizable chiral dopant may be further used. The polymerizable liquid crystal material and the polymerizable chiral dopant will be described.

### (1) Polymerizable liquid crystal material

As described above, polymerizable liquid crystal materials usable in the present invention include polymerizable liquid crystal monomers, polymerizable liquid crystal oligomers, and polymerizable liquid crystal polymeric materials. The polymerizable liquid crystal material is not particularly limited so far as, when the polymerizable liquid crystal material per se has formed a liquid crystal phase, the liquid crystal phase has nematic regularity, smectic regularity, or cholesteric regularity. The presence of a polymerizable functional group at both ends of the molecule is preferred from the viewpoint of the production of a highly heat resistant optical device.

Examples of such polymerizable liquid crystal materials include compounds (I) represented by formula (1) and compounds which will be described later. A mixture of two compounds covered by formula (1) may also be used as compound (I).

The polymerizable liquid crystal material may also be a mixture of two or more compounds covered by formula
(1) and the compounds which will be described later.

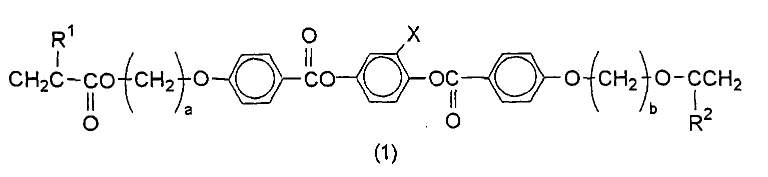

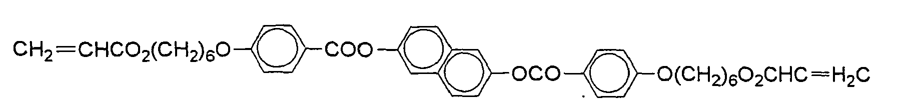

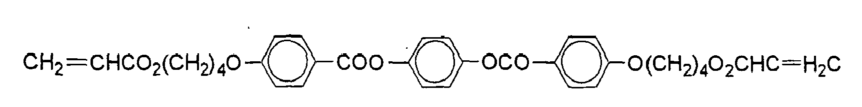

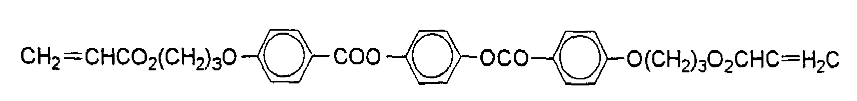

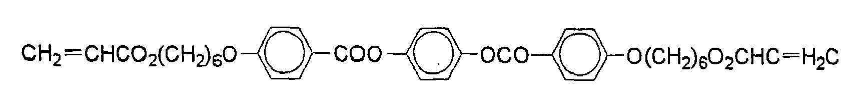

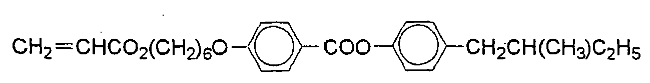

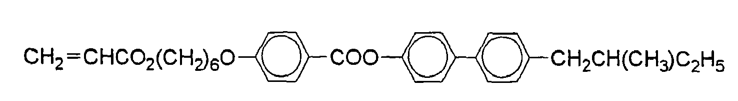

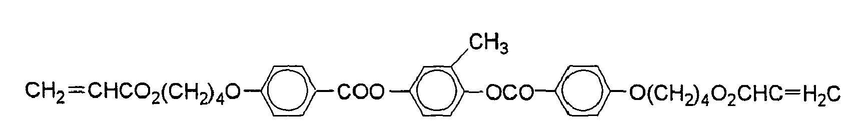

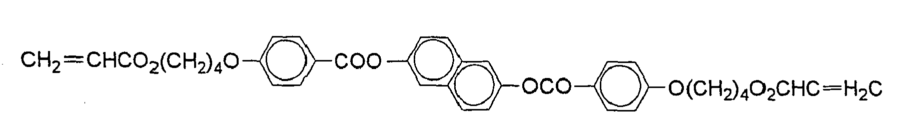

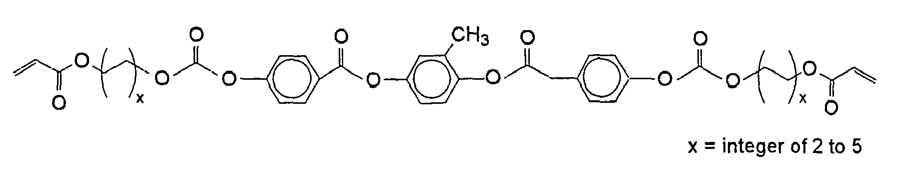

In formula (1) which represents compound (I), R¹ and R² each represent a hydrogen atom or a methyl group, and X preferably represents a chlorine atom or a methyl group. a and b showing the chain length of the alkylene group as a spacer of compound (I) are preferably in the range of 2 to 9 from the viewpoint of developing liquid crystallinity.

In the above embodiment, examples of polymerizable liquid crystal monomers have been described. In the present invention, however, for example, polymerizable liquid crystal oligomers and polymerizable liquid crystal polymeric materials may also be used. Conventional polymerizable liquid crystal oligomers and polymerizable liquid crystal polymeric materials may be properly selected and used.

### (2) Chiral dopant

In the present invention, when the above optical device is a circularly polarized light controlling optical device, that is, when the optical function layer is a cholesteric layer and the polymerizable liquid crystal material has nematic regularity or smectic regularity, a chiral dopant should be added in addition to the polymerizable liquid crystal material.

The polymerizable chiral dopant used in the present invention refers to a low-molecular compound which has an optically active site and a molecular weight of not more than 1,500. The chiral dopant is mainly used for inducing a helical pitch in positive uniaxial nematic regularity developed by compound (I). So far as this object can be attained, any low-molecular compound may be used as the chiral dopant without particular limitation. Specifically, any low-molecular compound may be used so far as the compound is compatible in a solution or melted state with compound (I) or the above compound, does not sacrifice the liquid crystallinity of the polymerizable liquid crystal material, which can have nematic regularity, and can induce a desired helical pitch in the nematic regularity. The presence of a polymerizable functional group at both ends of the molecule is preferred from the viewpoint of providing highly heat resistant optical device. For the chiral dopant used for inducing a helical pitch in the liquid crystal, any chirality should be found at least in the molecule. The chiral dopant having an optically active site incorporated in the liquid crystalline composition according to the present invention is preferably a chiral dopant which is significantly effective in inducing a helical pitch in the nematic regularity. Specifically, the use of low-molecular compounds (II) represented by formula (2), (3), or (4), which have axial asymmetry in their molecule, is preferred.

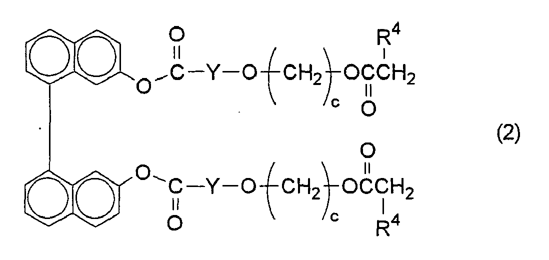

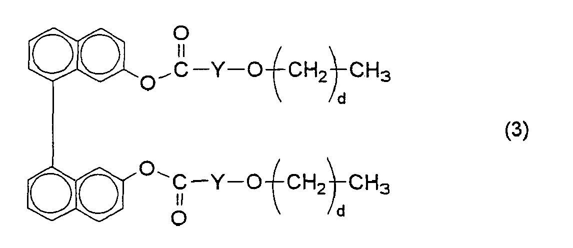

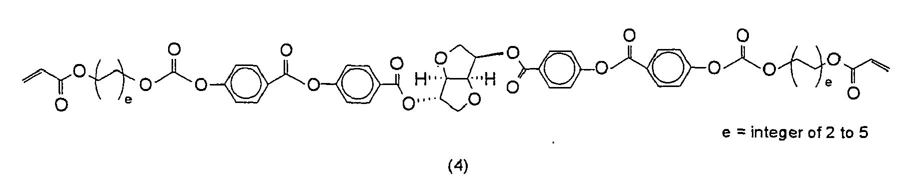

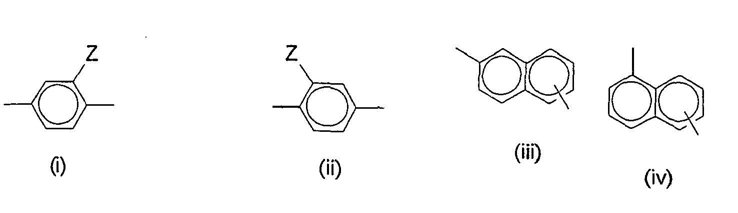

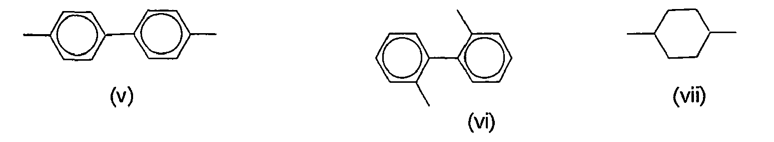

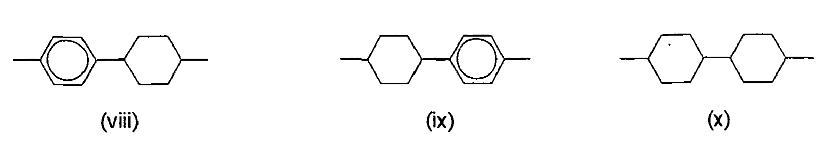

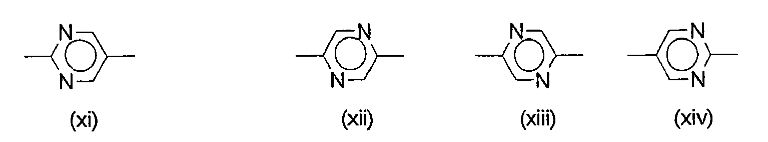

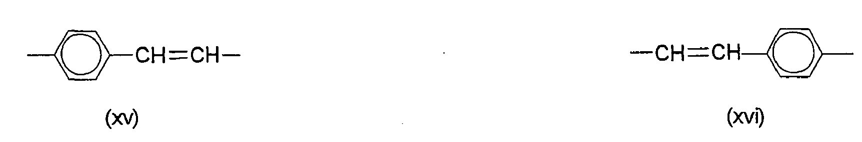

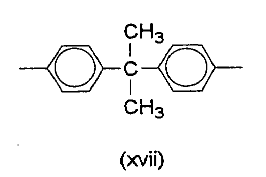

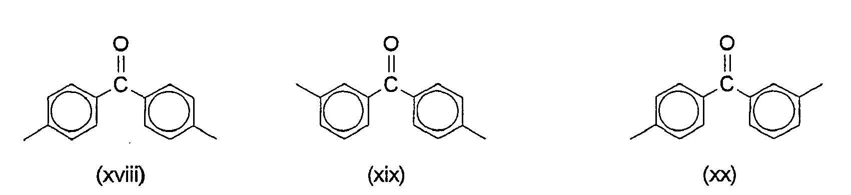

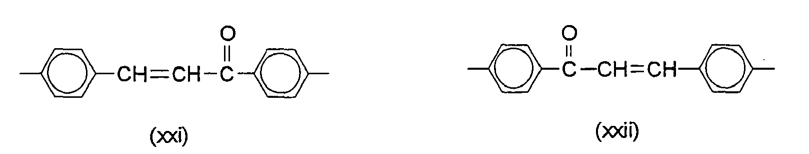

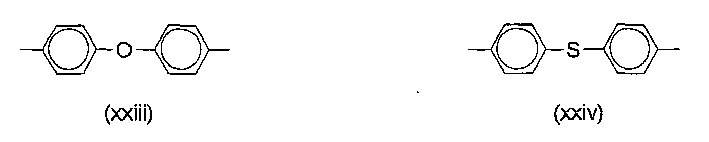

In formula (2), (3), or (4) which represents chiral dopant (II), R⁴ represents a hydrogen atom or a methyl group. Y represents any one of formulae (i) to (xxiv), preferably any one of formulae (i), (ii), (iii), (v), and (vii). c and d, which represent the chain length of the alkylene group, are preferably in the range of 2 to 9. When c and d are less than 2 or not less than 10, the liquid crystallinity is less likely to be developed.

The optimal amount of the chiral dopant incorporated in the polymerizable liquid crystal material according to the present invention is determined by taking into consideration the helical pitch inducing ability and the cholesteric nature of the finally obtained circularly polarized light controlling optical device. Specifically, although the amount of the chiral dopant incorporated significantly varies depending upon the polymerizable liquid crystal material used, the amount of the chiral dopant may be in the range of 1 to 20 parts by mass based on 100 parts by mass in total of the polymerizable liquid crystal material. When the amount of the chiral dopant incorporated is below the lower limit of the above-defined amount range, in some cases, satisfactory cholesteric nature cannot be imparted to the polymerizable liquid crystal material. On the other hand, when the amount of the chiral dopant incorporated is above the upper limit of the above-defined amount range, the alignment of molecules is inhibited. This possibly adversely affects curing by the application of an actinic radiation.

In the present invention, the chiral dopant is not necessarily polymerizable. When the heat stability and the like of the optical function layer are taken into consideration, however, the use of a polymerizable chiral dopant, which can be polymerized with the polymerizable liquid crystal material to anchor the cholesteric regularity, is preferred. In particular, the presence of a polymerizable functional group at both ends of the molecule is preferred from the viewpoint of providing highly heat resistant optical devices.

### (Composition for liquid crystal layer formation)

In the present invention, the composition for liquid crystal layer formation comprises the polymerizable liquid crystal material and, added thereto, other ingredients such as a photopolymerization initiator which is necessary for the polymerization. Materials, which may be added to the composition for liquid crystal layer formation, will be described.

### (1) Photopolymerization initiator

In the present invention, a photopolymerization initiator is preferably added to the polymerizable liquid crystal material. For example, when the polymerizable liquid crystal material is polymerized by electron beam irradiation, the use of a photopolymerization initiator is in some cases unnecessary. In the case of a generally used curing method, for example, curing by ultraviolet (UV) irradiation, a photopolymerization initiator is generally used for polymerization acceleration purposes.

In addition to the photopolymerization initiator, a sensitizer may be added in such an amount range that is not detrimental to the object of the present invention.

The photopolymerization initiator may be generally added in an amount of 0.5 to 10% by mass to the polymerizable liquid crystal material according to the present invention.

### (2) Other additives

Compounds other than the above compounds may be added to the composition for liquid crystal layer formation used in the present invention in such an amount range that is not detrimental to the object of the present invention. Examples of compounds, which may be added to the composition for liquid crystal layer formation include: polyester (meth)acrylates prepared by reacting (meth)acrylic acid with a polyester prepolymer prepared by condensing a polyhydric alcohol with a monobasic acid or a polybasic acid; polyurethane (meth)acrylate prepared by reacting a compound containing a polyol group with a compound containing two isocyanate groups and then reacting the reaction product with (meth)acrylic acid; photopolymerizable compounds, such as epoxy (meth)acrylate, prepared by reacting (meth)acrylic acid with an epoxy resin such as a bisphenol A epoxy resin, a bisphenol F epoxy resin, a novolak epoxy resin, a polyglycidyl ester of a polycarboxylic acid, a polyol polyglycidyl ether, an aliphatic or alicyclic epoxy resin, an amine epoxy resin, a triphenolmethane epoxy resin, or dihydroxybenzene epoxy resin; and photopolymerizable liquid crystalline compounds containing an acryl group or a methacryl group.

The amount of the above compound added to the liquid crystalline composition according to the present invention is selected in such an amount range that is not detrimental to the object of the present invention. The amount of the above compound added is generally not more than 40% by weight, preferably not more than 20% by weight, based on the liquid crystalline composition according to the present invention. The addition of the above compound to the liquid crystalline composition according to the present invention can improve the curability of the liquid crystalline composition according to the present invention, can increase the mechanical strength of the cured film, and can improve the stability of the liquid crystal.

### (Coating liquid for liquid crystal layer formation)

In the present invention, the above liquid crystal layer is preferably formed by coating a coating liquid for liquid crystal layer formation and drying the coating. The coating liquid for liquid crystal layer formation is a solution prepared by the above material for liquid crystal layer formation in a solvent. If necessary, a surfactant and the like may be added to the solution. The ingredients of the coating liquid for liquid crystal layer formation will be described.

### (1) Solvent

The solvent usable in the coating liquid for liquid crystal layer formation is not particularly limited so far as the solvent can dissolve the polymerizable liquid crystal material and the like and is not detrimental to the aligning ability on the supporting substrate having an aligning ability.

Specific examples of solvents usable herein include: hydrocarbons such as benzene, toluene, xylene, n-butylbenzene, diethylbenzene, and tetralin; ethers such as methoxybenzene, 1,2-dimethoxybenzene, and diethylene glycol dimethyl ether; ketones such as acetone, methyl ethyl ketone, methyl isobutyl ketone, cyclohexanone, and 2,4-pentanedione; esters such as ethyl acetate, ethylene glycol monomethyl ether acetate, propylene glycol monomethyl ether acetate, propylene glycol monoethyl ether acetate, and γ-butyrolactone; amide solvents such as 2-pyrrolidone, N-methyl-2-pyrrolidone, dimethylformamide, and dimethylacetamide; halogenated solvents such as chloroform, dichloromethane, carbon tetrachloride, dichloroethane, tetrachloroethane, trichloroethylene, tetrachloroethylene, chlorobenzene, and o-dichlorobenzene; alcohols such as t-butyl alcohol, diacetone alcohol, glycerin, monoacetin, ethylene glycol, triethylene glycol, hexylene glycol, ethylene glycol monomethyl ether, ethyl cellosolve, and butyl cellosolve; and phenols such as phenol and p-chlorophenol. They may be used solely or in combination of two or more.

The use of a single solvent sometimes results in unsatisfactory solubility of the polymerizable liquid crystal material and the like or the attack of the supporting substrate having an aligning ability. The use of a mixture of two or more solvents can avoid such troubles. Among the above solvents, hydrocarbon solvents and glycol monoether acetate solvents are preferred for use as a single solvent, and a mixed solvent system composed of ethers or ketones and glycols is preferred for use as a mixed solvent. Suitable concentration of the polymerizable liquid crystal material in the solution varies depending upon the solubility of the liquid crystalline composition and the film thickness of the circularly polarized light controlling optical device to be produced and thus cannot be unconditionally specified. However, the concentration of the polymerizable liquid crystal material is generally in the range of 1 to 60% by weight, preferably in the range of 3 to 40% by weight.

### (2) Surfactant

A surfactant and the like may be added for coatability improvement purposes to the coating liquid for liquid crystal layer formation. Examples of surfactants usable herein include: cationic surfactants such as imidazoline, quaternary ammonium salts, alkylamine oxides, and polyamine derivatives; anionic surfactants such as polyoxyethylene-polyoxypropylene condensates, primary or secondary alcohol ethoxylates, alkylphenol ethoxylates, polyethylene glycol and esters thereof, sodium laurylsulfate, ammonium laurylsulfate, amine lauryl sulfates, salts of alkyl-substituted aromatic sulfonic acids, salts of alkylphosphoric acids, and aliphatic or aromatic sulfonic acid-formalin condensates; amphoteric surfactants such as laurylamide propyl betaine and laurylaminoacetic acid betaine; nonionic surfactants such as polyethylene glycol fatty acid esters and polyoxyethylene alkylamines; and fluorosurfactants such as salts of perfluoroalkylsulfonic acids, salts of perfluoroalkylcarboxylic acids, perfluoroalkyl ethylene oxide adducts, perfluoroalkyl trimethyl ammonium salts, perfluoroalkyl- and hydrophilic group-containing oligomers, perfluoroalkyl- and lipophilic group-containing oligomers, and perfluoroalkyl-containing urethanes.

The amount of the surfactant added is generally 10 ppm by weight to 10% by weight, preferably 100 ppm by weight to 5% by weight, more preferably 0.1 to 1% by weight, based on the liquid crystalline composition contained in the solution, although the amount of the surfactant added varies depending upon the type of the surfactant, the type of the polymerizable liquid crystal material, the type of the solvent, and the type of the supporting substrate having an aligning ability to be coated with the solution.

### (Liquid crystal regularity)

In the present invention, a liquid crystal layer is formed by imparting predetermined liquid crystal regularity to the polymerizable liquid crystal material.

Nematic regularity, smectic regularity, and cholesteric regularity may be mentioned as the liquid crystal regularity. When the optical device is a retardation layer laminate, the optical function layer has nematic regularity or smectic regularity. On the other hand, when the optical device is a circularly polarized light controlling optical device, the optical function layer has cholesteric regularity.

The regularity is basically determined by liquid crystal regularity, which the polymerizable liquid crystal material per se develops, and whether or not a chiral dopant is used.

The liquid crystal regularity can be provided by forming, on a supporting substrate having an aligning ability, a layer, for liquid crystal layer formation, comprising the above polymerizable liquid crystal material and an optional polymerizable chiral dopant and holding the layer at a temperature which brings the layer to a liquid crystal phase.

### 3. Step of forming optical function layer

In the present invention, upon the application of an actinic radiation to a liquid crystal layer, composed mainly of a polymerizable liquid crystal material, formed in the step of forming a liquid crystal layer, the liquid crystal layer is cured in such a state that liquid crystal regularity is retained. Thus, optical function layers having various optical functions can be formed.

The actinic radiation applied at that time is not particularly limited so far as the actinic radiation can polymerize the polymerizable liquid crystal material, the polymerizable chiral dopant and the like. In general, however, light with a wavelength of 250 to 450 nm is applied.

The irradiation intensity may be properly regulated depending upon the composition of the polymerizable liquid crystal material constituting the liquid crystal layer and the amount of the photopolymerization initiator.

### 4. Step of transfer

In the production process according to the present invention, if necessary, the step of transferring the optical function layer, provided on the supporting substrate having an aligning ability, onto a receiving object may be provided after the step of forming an optical function layer.

The step of transfer may be carried out according to need, for example, in the case where the optical function layer is used in combination with other layer(s) or in the case where, although the optical function layer is preferably formed on a nonflexible supporting substrate, the optical function layer is intended to be used in such a state that the optical function layer is provided on the surface of a flexible film.

The transfer is carried out by bringing the surface of the receiving object into contact with the surface of the optical function layer formed in the step of forming an optical function layer (see Figs. 8 and 9).

Transfer methods usable herein include, for example, a method wherein an adhesive layer is previously formed on the surface of the receiving object or the surface of the optical function layer and the optical function layer is transferred by taking advantage of the adhesive power, and a method wherein the aligning film or the like in the supporting substrate is rendered easily separable.

Further methods effective for the transfer include a method wherein the optical function layer is formed so that the hardness of the surface of the optical function layer on its side, with which the receiving object comes into contact, is lower than the hardness of the surface of the optical function layer on its supporting substrate side and the optical function layer is transferred from this assembly onto the receiving object, and a method wherein the optical function layer is formed so that the percentage residual double bond in the surface of the optical function layer on its receiving object side is higher than that in the surface of the optical function layer on its supporting substrate side and the optical function layer is transferred from this assembly onto the receiving object. The degree of polymerization on the surface side of the optical function layer can be made lower than that on the substrate side, for example, by using a photopolymerization initiator, which has such oxygen dependency that causes a lowering in polymerization rate in the presence of oxygen, in the polymerizable liquid crystal material and conducting polymerization under conditions such that oxygen comes into contact with only the surface side of the optical function layer.

The receiving object used in this step may be properly selected depending upon applications of the optical device. In general, however, the use of a transparent material, that is, a transparent substrate, is suitable.

This transparent substrate may be the same as that described in the above column of "1. Step of providing supporting substrate," and, thus, the description thereof will be omitted.

### 5. Step of heat treatment

The present invention is **characterized in that** the step of heat treatment is carried out after the step of forming an optical function layer or after the step of transfer.

Specifically, the heat treatment of the optical device according to the present invention is **characterized in that** the optical device comprising a supporting substrate, provided in the step of providing a supporting substrate, and an optical function layer formed on the supporting substrate in the step of forming an optical function layer, or the optical device comprising a receiving object and an optical function layer transferred onto the surface of the receiving object, in the case where the step of transfer has been carried out, is heat treated at a temperature in the range of 80 to 120°C when the supporting substrate or the receiving object is a TAC film or the like; and at a temperature in the range of 180 to 240°C, preferably in the range of 190 to 230°C, particularly preferably in the range of 200 to 220°C when the supporting substrate or the receiving object is glass.

In the present invention, when the heat treatment temperature is below the lower limit of the above-defined temperature range, the adhesion between the supporting substrate or the receiving object and the optical function layer is disadvantageously unsatisfactory. On the other hand, when the heat treatment temperature is above the upper limit of the above-defined temperature range, disadvantageously, there is a fear that, for example, the optical function layer, the supporting substrate, or the receiving object is damaged by the heat.

In the present invention, the period of time for which the heat treatment is carried out in the above-defined temperature range, more specifically the time elapsed after the optical function layer is brought to the above-defined temperature range, is in the range of 1 to 60 min, preferably in the range of 3 to 45 min, particularly preferably in the range of 5 to 30 min. When the heat treatment time is below the lower limit of the above-defined time range, the adhesion between the supporting material and the optical function layer is disadvantageously unsatisfactory. On the other hand, when the heat treatment time is above the upper limit of the above-defined time range, disadvantageously, there is a fear that the optical function layer or the supporting material is deteriorated by the heat.

The heat treatment may be carried out in conventional heat treatment equipment such as an oven.

### 6. Other steps

In the present invention, if necessary, various steps may be carried out after the above production process.

Specifically, the step of forming a protective layer on the optical function layer may be provided. The formation of the protective layer is advantageous in that, even when the adhesion between the optical function layer and the supporting material is unsatisfactory, the optical device can be used because the optical device can be reinforced with the protective layer.

The protective layer may be formed by coating a coating liquid for protective layer formation, and resin materials such as acrylic resins and epoxy resins are generally used as the material for the protective layer.

### <Optical device>

The optical device according to the present invention is characterized by comprising a supporting material and, provided on the supporting material, an optical function layer which has been formed by curing a polymerizable liquid crystal material in such a state that predetermined liquid crystal regularity is retained, the adhesion between the optical function layer and the supporting material being not less than 6 in terms of evaluation point number in a cross-cut tape peel test specified in JIS (Japanese Industrial Standards) K 5400 (1990) 8.5. The adhesion is preferably not less than 8, particularly preferably not less than 10.

In the optical device according to the present invention, the adhesion between the optical function layer and the supporting material is so good that the optical device, when used in an image processing apparatus or the like, can be easily handled. The conventional optical function layer formed of a cured product of a polymerizable liquid crystal material has very low adhesion to the supporting material. The above adhesion in the present invention cannot be attained by the prior art technique. The optical device according to the present invention has significant superiority over conventional products.

The cross-cut tape peel test is a test wherein cut flaws, which pass through the coating provided on a test piece and reach the substrate surface of the sample plate, are provided with a sharp edge to form cross-cuts, and a pressure-sensitive adhesive tape is attached to the test piece and is then separated, followed by visual inspection of the adhesion of the coating to the substrate. As described above, this test is detailedly specified in JIS K 5400 (1990) 8.5.

The optical device will be described for each element.

### 1. Supporting material

The supporting material referred to in the present invention is a supporting substrate having an aligning ability, or a receiving object in the case where the optical function layer is transferred in the step of transfer onto the receiving object.

The supporting substrate having an aligning ability is as described above in the column of "Production process of optical device," and the description thereof will be omitted.

When the use of the optical function layer on a substrate having no aligning ability on its surface is contemplated, as described above in the column of "Production process of optical device," in some cases, the optical function layer is transferred from the supporting substrate having an aligning ability onto a receiving object. In this case, the supporting material is the receiving object. The receiving object is also as described above, and the description thereof will be omitted.

### 2. Optical function layer

The optical device according to the present invention comprises a supporting material and, provided on the supporting material, an optical function layer formed by curing a polymerizable liquid crystal material while retaining predetermined liquid crystal regularity. That is, the optical function layer is formed of a polymerizable liquid crystal material constituting the polymeric material having liquid crystal regularity.

The polymerizable liquid crystal material and the liquid crystal regularity are as described above in the column of "Production process of optical device," and the description thereof will be omitted.

### 3. Embodiments of optical device

A retardation layer laminate, wherein the optical function layer is a retardation layer, is an embodiment of the optical device according to the present invention, and a circularly polarized light controlling optical device, wherein the optical function layer is a cholesteric layer, is another embodiment of the optical device according to the present invention. These embodiments will be described.

### Retardation layer laminate

In the present invention, when the optical device is a retardation layer laminate, the retardation layer laminate comprises a supporting material and, provided on the supporting material, a retardation layer formed by curing a polymerizable liquid crystal material while retaining nematic regularity or smectic regularity. In the retardation layer laminate, the adhesion between the supporting material and the optical function layer is in the above-defined adhesion range.

Thus, in the optical device according to the present invention, since the adhesion between the supporting material and the optical function layer is satisfactory, the optical device, even when used in optical equipment, can be easily handled. Therefore, the optical device can be used in various applications.

### Circularly polarized light controlling optical device

In the present invention, when the optical device is a circularly polarized light controlling optical device, the circularly polarized light controlling optical device comprises a supporting material and, provided on the supporting material, a cholesteric layer formed by curing a polymerizable liquid crystal material while retaining cholesteric regularity. In the circularly polarized light controlling optical device, the adhesion between the supporting material and the optical function layer is in the above-defined adhesion range.

Also in this case, as with the retardation layer laminate, since the adhesion between the supporting material and the optical function layer is satisfactory, the optical device, even when used in optical equipment, can be easily handled. Therefore, the optical device can be used in various applications.

It should be noted that the present invention is not limited to the above embodiments. The above embodiments are illustrative only, and variations and modifications fall within the technical scope of the present invention so far as they have substantially the same construction as and the same function and effect as the technical idea described in the claims of the present invention.

### [EXAMPLES]

The following examples further illustrate the present invention.

### A. Cholesteric layer

### 1. Preparation of coating liquid for liquid crystal layer formation

A powder of a 100 : 5 : 5 (wt%) mixture of a polymerizable liquid crystal material, a chiral dopant, and a photopolymerization initiator was dissolved at a concentration of 30% by weight in toluene to prepare a coating liquid for liquid crystal layer formation. The polymerizable liquid crystal material, the chiral dopant, and the photopolymerization initiator used were as follows.

· Polymerizable liquid crystal material: A polymerizable liquid crystal monomer represented by formula (5) which has a polymerizable functional group in its ends and exhibits nematic liquid crystallinity at 50 to 100°C 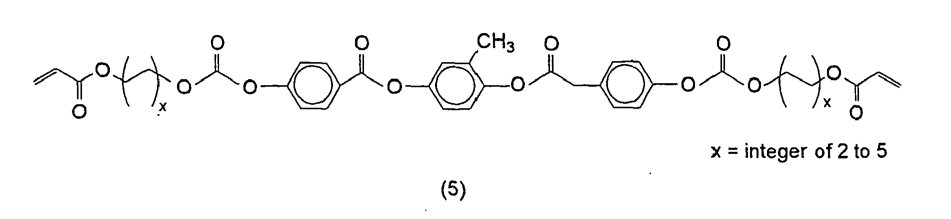 · Chiral dopant: A polymerizable chiral dopant produced by attaching acrylate to both ends of a mesogen of a compound represented by formula (6) through a spacer to render the compound polymerizable 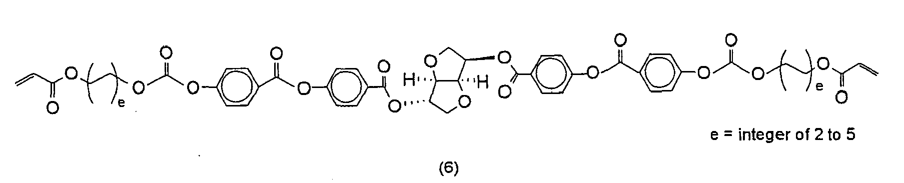 · Photopolymerization initiator: IRG 907 (tradename, manufactured by Ciba Specialty Chemicals, K.K.)

### 2. Formation of aligning film

Next, a solution for the formation of an aligning film composed mainly of polyimide was spin coated onto a 0.7 mm-thick glass substrate. The solvent was evaporated, and the coating was then post-baked at 200°C, followed by rubbing by a conventional method to form an aligning film.

Separately, a solution for the formation of an aligning film composed mainly of polyvinyl alcohol was bar coated onto an 80 µm-thick TAC film. The solvent was evaporated, and the coating was then post-baked at 100°C, followed by rubbing by a conventional method to form an aligning film.

### 3. Formation of cholesteric layer

The above coating liquid for liquid crystal layer formation was spin coated onto the aligning film of polyvinyl alcohol. The solvent was then evaporated. Thereafter, liquid crystal molecules were aligned under conditions of 80°C and 3 min, and selective reflection characteristic of a cholesteric structure could be confirmed. Ultraviolet light (UV) was then applied to the coating to cause polymerization, thereby forming a cholesteric layer. Thus, sample 1 was prepared.

Separately, the above coating liquid for liquid crystal layer formation was bar coated onto the aligning film of polyvinyl alcohol. The solvent was then evaporated. Thereafter, liquid crystal molecules were aligned under conditions of 80°C and 3 min, and selective reflection characteristic of a cholesteric structure could be confirmed. Ultraviolet light (UV) was then applied to the coating to cause polymerization, thereby forming a cholesteric layer. Thus, sample 2 was prepared.

The samples thus obtained were heat treated under the following heat treatment conditions. The heat treated samples were then self-cooled to room temperature and allowed to stand for one day. These samples were classified according to the heat treatment conditions into Comparative Examples 1 to 8 and Examples 1 to 8.

### 4. Evaluation

The samples of Comparative Examples 1 to 8 and Examples 1 to 8 were subjected to a cross-cut tape peel test specified in JIS K 5400 (1990) 8.5. The heat treatment conditions and the results are summarized in Table 1 below.

**Table 1: Results of cross-cut tape peel test**

| | Sample | Conditions for heat treatment | Evaluation point No. |
|---|---|---|---|
| Comp. Ex. 1 | Sample 1 | Heat treatment not done | 0 |
| Comp. Ex. 2 | | 80°C x 30 min | 0 |
| Comp. Ex. 3 | | 100°C x 30 min | 0 |
| Comp. Ex. 4 | | 120°C x 30 min | 0 |
| Comp. Ex. 5 | | 160°C x 30 min | 2 |
| Ex. 1 | Sample 1 | 180°C x 30 min | 6 |
| Ex. 2 | | 200°C x 30 min | 8 |
| Ex. 3 | | 220°C x 30 min | 8 |
| Ex. 4 | | 240°C x 30 min | 10 |
| Ex. 5 | | 260°C x 30 min | 10 |
| Ex. 6 | Sample 2 | 80°C x 30 min | 6 |
| Ex. 7 | | 100°C x 30 min | 8 |
| Ex. 8 | | 120°C x 30 min | 10 |
| Comp. Ex. 6 | Sample 2 | Heat treatment not done | 0 |
| Comp. Ex. 7 | | 80°C x 30 min | 0 |
| Comp. Ex. 8 | | 100°C x 30 min | 0 |

In the table, for the sample of Comparative Example 1 and the sample of Comparative Example 6 wherein the heat treatment was not carried out, peeling disadvantageously occurred in the whole area and the evaluation point number was inferior to that of other samples subjected to the heat treatment.

In the table, the evaluation point number was determined according to criteria, shown in Table 2 below, specified in JIS K 5400 (1990) 8.5.

**Table 2: Evaluation criteria of cross-cut tape peel test**

| Evaluation point number | Condition of flaw |
|---|---|
| 10 | Each cut flaw was fine and smooth, and intersecting points of cut flaws and each square formed by cross-cutting were free from peeling. |
| 8 | Peeling slightly occurred at the intersecting line of cut flaws, each square formed by cross-cutting was free from peeling, and the area of loss part was within 5% of the total square area. |
| 6 | Peeling occurred at the intersecting line of cut flaws, and the area of loss part was 5 to 15% of the total square area. |
| 4 | The width of peeling derived from cut flaws was large, and the area of loss part was 15 to 35% of the total square area. |
| 2 | The width of peeling derived from cut flaws was larger than that in the case of the evaluation point number 4, and the area of loss part was 35 to 65% of the total square area. |
| 0 | The peeling area was not less than 65% of the total square area. |

### B. Retardation layer

### 1. Preparation of coating liquid for liquid crystal layer formation and formation of aligning film

A coating liquid for liquid crystal layer formation was prepared in the same manner as in the above item A, except that any chiral dopant was not used and the mixing ratio of the polymerizable liquid crystal material to the photopolymerization initiator was 100 : 5 (wt%). Further, an aligning film was formed in the same manner as in the above item A.

### 2. Formation of retardation layer

The coating liquid for liquid crystal layer formation was spin coated or bar coated on the above aligning film. The solvent was then evaporated. Thereafter, liquid crystal molecules were nematically aligned under conditions of 80°C and 3 min. Ultraviolet light (UV) was then applied to the coating to cause polymerization, thereby forming a retardation layer. Thus, samples 3 and 4 were prepared.

The samples thus obtained were heat treated under the following heat treatment conditions. The heat treated samples were then self-cooled to room temperature and allowed to stand for one day. These samples were classified according to the heat treatment conditions into Comparative Examples 1 to 8 and Examples 1 to 8.

### 3. Evaluation

The samples of Comparative Examples 1 to 8 and Examples 1 to 8 were subjected to a cross-cut tape peel test specified in JIS K 5400 (1990) 8.5. The heat treatment conditions and the results are summarized in Table 3 below.

**Table 3: Results of cross-cut tape peel test**

| | Sample | Conditions for heat treatment | Evaluation point No. |
|---|---|---|---|
| Comp. Ex. 1 | Sample 3 | Heat treatment not done | 0 |
| Comp. Ex. 2 | | 80°C x 30 min | 0 |
| Comp. Ex. 3 | | 100°C x 30 min | 0 |
| Comp. Ex. 4 | | 120°C x 30 min | 0 |
| Comp. Ex. 5 | | 160°C x 30 min | 2 |
| Ex. 1 | Sample 3 | 180°C x 30 min | 6 |
| Ex. 2 | | 200°C x 30 min | 8 |
| Ex. 3 | | 220°C x 30 min | 8 |
| Ex. 4 | | 240°C x 30 min | 10 |
| Ex. 5 | | 260°C x 30 min | 10 |
| Ex. 6 | Sample 4 | 80°C x 30 min | 6 |
| Ex. 7 | | 100°C x 30 min | 8 |
| Ex. 8 | | 120°C x 30 min | 10 |
| Comp. Ex. 6 | Sample 4 | Heat treatment not done | 0 |
| Comp. Ex. 7 | | 80°C x 30 min | 0 |
| Comp. Ex. 8 | | 100°C x 30 min | 0 |

In the table, for the sample of Comparative Example 1 and the sample of Comparative Example 6 wherein the heat treatment was not carried out, peeling disadvantageously occurred in the whole area and the evaluation point number was inferior to that of other samples subjected to the heat treatment.

### C. Retardation layer 2

### 1. Preparation of coating liquid for liquid crystal layer formation and formation of aligning film

A coating liquid for liquid crystal layer formation was prepared in the same manner as in the above item A, except that the mixing ratio among the polymerizable liquid crystal material, the chiral dopant, and the photopolymerization initiator was 100 : 7 : 5 (wt%). Further, an aligning film was formed in the same manner as in the above item A.

### 2. Formation of retardation layer

The coating liquid for liquid crystal layer formation was spin coated on the aligning film of polyimide. The solvent was then evaporated. Thereafter, liquid crystal molecules were aligned under conditions of 80°C and 3 min. Ultraviolet light (UV) was then applied to the coating to cause polymerization, thereby forming a cholesteric layer. Thus, sample 5 was prepared. Since the content of the chiral dopant component in the above coating liquid for liquid crystal layer formation was higher than that in the coating liquid for liquid crystal formation used in Example 1, the selective reflection center wavelength of the sample 5 thus prepared was in the ultraviolet region. The retardation layer thus formed could function as a negative C plate phase difference compensating plate.

The above coating liquid for liquid crystal layer formation was bar coated onto the aligning film of polyvinyl alcohol. The solvent was then evaporated. Thereafter, liquid crystal molecules were aligned under conditions of 80°C and 3 min. UV was then applied to the coating to cause polymerization, thereby forming a cholesteric layer. Thus, sample 6 was prepared. Also for sample 6, the selective reflection center wavelength was in the ultraviolet region.

The samples thus obtained were heat treated under the following heat treatment conditions. The heat treated samples were then self-cooled to room temperature and allowed to stand for one day. These samples were classified according to the heat treatment conditions into Comparative Examples 1 to 8 and Examples 1 to 8.

### 3. Evaluation

The samples of Comparative Examples 1 to 8 and Examples 1 to 8 were subjected to a cross-cut tape peel test specified in JIS K 5400 (1990) 8.5. The heat treatment conditions and the results are summarized in Table 4 below.

**Table 4: Results of cross-cut tape peel test**

| | Sample | Conditions for heat treatment | Evaluation point No. |
|---|---|---|---|
| Comp. Ex. 1 | Sample 5 | Heat treatment not done | 0 |
| Comp. Ex. 2 | | 80°C x 30 min | 0 |
| Comp. Ex. 3 | | 100°C x 30 min | 0 |
| Comp. Ex. 4 | | 120°C x 30 min | 0 |
| Comp. Ex. 5 | | 160°C x 30 min | 2 |
| Ex. 1 | Sample 5 | 180°C x 30 min | 6 |
| Ex. 2 | | 200°C x 30 min | 8 |
| Ex. 3 | | 220°C x 30 min | 8 |
| Ex. 4 | | 240°C x 30 min | 10 |
| Ex. 5 | | 260°C x 30 min | 10 |
| Ex. 6 | Sample 6 | 80°C x 30 min | 6 |
| Ex. 7 | | 100°C x 30 min | 8 |
| Ex. 8 | | 120°C x 30 min | 10 |
| Comp. Ex. 6 | Sample 6 | Heat treatment not done | 0 |
| Comp. Ex. 7 | | 80°C x 30 min | 0 |
| Comp. Ex. 8 | | 100°C x 30 min | 0 |

In the table, for the sample of Comparative Example 1 and the sample of Comparative Example 6 wherein the heat treatment was not carried out, peeling disadvantageously occurred in the whole area and the evaluation point number was inferior to that of other samples subjected to the heat treatment.

## Claims

1. A process for producing an optical device (8), **characterized by** comprising the steps of:
providing a supporting substrate (3) having an aligning ability;
stacking a composition, containing at least a polymerizable liquid crystal material, for liquid crystal layer formation on the supporting substrate (3) and holding the layer at a temperature which brings the layer to a liquid crystal phase, to form a liquid crystal layer (4) having predetermined liquid crystal regularity;
applying an actinic radiation to the liquid crystal layer (4) to convert the liquid crystal layer (4) to an optical function layer (6)(step of forming optical function layer (6))by polymerization (cross-linking) ; and
heat treating the optical function layer (6) at or above a temperature which corresponds to an isotropic phase after forming the optical function layer (6),
wherein the supporting substrate (3) is a stretched polyethylene terephthalate film having an aligning ability.

2. The process according to claim 1, wherein the polymerizable liquid crystal material comprises a polymerizable monomer and the predetermined liquid crystal regularity is nematic liquid crystal regularity or smectic liquid crystal regularity.

3. The process according to claim 1, wherein the polymerizable liquid crystal material comprises a polymerizable monomer and a polymerizable chiral dopant and the predetermined liquid crystal regularity is cholesteric liquid crystal regularity.

4. The process according to any one of claims 1 to 3, wherein the composition for liquid crystal layer formation further comprises a photopolymerization initiator

5. The process according to any one of claims 1 to 4, wherein the composition for liquid crystal layer formation is a solvent-type coating liquid for liquid crystal layer formation.

6. The process according to any one of claims 1 to 5, wherein the heat treatment is carried out at temperature in the range of 80 to 120°C.

7. The process according to any one of claims 1 to 6, wherein the heat treatment is carried out for 1 to 60 min.

8. The process according to any one of claims 1 to 7, which further comprises, after the step of optical function layer formation, the step of transferring the optical function layer (6) formed on the supporting substrate (3) onto a receiving object (9).

9. The process according to any one of claims 1 to 8, wherein the polymerizable liquid crystal material comprises a polymerizable liquid crystal monomer and the molecule of the polymerizable liquid crystal monomer has a polymerizable functional group in its both ends.

10. The process according to claim 9, wherein the polymerizable liquid crystal material comprises a polymerizable liquid crystal monomer and a polymerizable chiral dopant and the molecule of the polymerizable chiral dopant has a polymerizable functional group in its both ends.

11. The process according to any one of claims 1 to 10, which further comprises, after the step of heat treatment, the step of forming a protective layer.

12. The process according to claim 1, further comprising the steps of:
transferring the optical function layer (6), provided on the supporting substrate (3) having an aligning ability, onto a receiving object (9) after the step of forming the optical function layer (6).

13. An optical device (8) produced by the process according to any one of claim 1 to 12, comprising: a stretched polyethylene terephthalate film as a supporting substrate (3) having an aligning ability; and an optical function layer (6) provided on the stretched polyethylene terephthalate film (3).

14. The optical device (8) according to claim 13, wherein the supporting material is a receiving object (9) which is a transparent substrate.

15. The optical device (8) according to claim 13 or 14, wherein the polymerizable liquid crystal material comprises a polymerizable monomer, the predetermined liquid crystal regularity is nematic liquid crystal regularity or smectic liquid crystal regularity, and the optical function layer (6) is a retardation layer

16. The optical device (8) according to claim 13 or 14, wherein the polymerizable liquid crystal material comprises a polymerizable monomer and a polymerizable chiral dopant and the predetermined liquid crystal regularity is cholesteric liquid crystal regularity and the optical function layer (6) is a selective reflecting layer and/or a retardation layer.

17. A method for heat treating the optical device (8) according to any one of claims 13 to 16 **characterized in that** the polymerizable liquid crystal material comprises a polymerizable liquid crystal monomer and the molecule of the polymerizable liquid crystal monomer has a polymerizable functional group in its both ends.

18. The method according to claim 17, wherein the polymerizable liquid crystal material comprises a polymerizable liquid crystal monomer and a polymerizable chiral dopant and the molecule of the polymerizable chiral dopant has a polymerizable functional group in its both ends.
